# EUROPEAN PATENT APPLICATION

(11) **EP 4 645 761 A1**
(43) Date of publication of application: **05.11.2025**
(21) Application number: 24174060.4
(22) Date of filing: 03.05.2024
(51) Int. Cl.: H04L 9/40

(54) **VIRTUAL DCS SECURITY OPERATOR FOR INCIDENT DETECTION AND RESPONSE**

(71) Applicant: ABB SCHWEIZ AG, 5400 Baden (CH)
(72) Inventor: KOZIOLEK, Heiko, 76227 Karlsruhe (DE); KOHNHAEUSER, Florian, 64560 Riedstadt (DE); HARK, Rhaban, 64347 Griesheim (DE)
(74) Representative: Maiwald GmbH

(57) **Abstract**

There is disclosed a method for security incident detection in a cloud-native distributed control system, DCS, in industrial process automation. The method comprises monitoring information technology, IT -related data and operation technology, OT, -related data at a production process and at a containerized DCS associated with the production process. The method further comprises joint analysing of first data indicative of first monitoring data from the monitoring of the IT-related data and of second data indicative of second monitoring data from the monitoring of the OT-related data. The joint analysing is based on correlating at least part of the first data with at least part of the second data and/or based on correlating at least part of the second data with at least part of the first data. The method further comprises, based on the joint analysing, detecting a security incident under consideration of predetermined security incident detection rules: The method further comprises, based on a result of the detecting, responding on a detected security incident for handling of the detected security incident under consideration of predetermined security incident response rules.

## Description

### FIELD OF THE INVENTION

The invention relates to a Virtual DCS Security Operator for Incident Detection and Response.

### BACKGROUND

Security incident detection in a cloud-native distributed control system (DCS) is challenging due to the vast amounts of data to process and the isolated treatment of information technology (IT) -related data, like user access logs for example, and operational technology (OT) -related data, like motor startup irregularities for example. Upon detecting a potential incident, a security management system must react fast to possibly contain the incident and keep it from further spreading through the system.

Hence, there are several drawbacks available regarding security incident detection in a cloud-native DCS. Thus, there is room and need for improvement. In particular, there is need for automatic security incidence responses that can contain security breaches.

### SUMMARY

In view of the above, it is an object of the present disclosure to overcome at least part of the drawbacks available in security incident detection in a cloud-native DCS.

A system to overcome at least part of these drawbacks may need to cover certain requirements regarding data processing and functionality. For example, a system may be required that can process and correlate both IT-related and OT-related data. Unlike a generic intrusion detection or incident monitoring system, for DCSs domain specific incident detection and response rules are required. The system may require to function in a cloud-native environment to utilize containerized DCS services and to function mostly autonomously to not overburden the user. A Virtual DCS Security Operator as disclosed throughout the present application according to several examples may cover these requirements.

Therefore, in view of the above and to address one or more of the drawbacks, there is provided, in a first aspect, a method for security incident detection in a cloud-native distributed control system, DCS, in industrial process automation. The method comprises monitoring information technology, IT -related data and operation technology, OT, -related data at a production process and at a containerized DCS associated with the production process. The method further comprises joint analysing of first data indicative of first monitoring data from the monitoring of the IT-related data and of second data indicative of second monitoring data from the monitoring of the OT-related data. The joint analysing is based on correlating at least part of the first data with at least part of the second data and/or based on correlating at least part of the second data with at least part of the first data. The method further comprises, based on the joint analysing, detecting a security incident under consideration of predetermined security incident detection rules. The method further comprises, based on a result of the detecting, responding on a detected security incident for handling of the detected security incident under consideration of predetermined security incident response rules.

As an example for improving understandability, the correlating may comprise to correlate by timestamp an OT event, such a sensor value drift, with an IT event, such as a user login, so that potential manipulations of the automation procedures can be detected.

It shall be noted that joint analysing may also be understood as a combined analysing. Joint analysing may also be understood as analysing the first data and the second data separately or subsequently, but comparing or cross-analysing results from the separate or subsequent analysing. I.e., the first data are not analysed alone or exclusively, and the second data are not analysed alone or exclusively.

It shall further be noted that the predetermined security incident detection rules may be customized security incident detection rules and may be specified for a certain DCS and/or production process. The expression "responding for handling" may be understood in that, in response to a security incident being detected, measures are taken or triggered to handle, like to eliminate the detected security incident. The measures may comprise that a notification to a user may be issued for example, or that the detected security incident is eliminated autonomously by a data processing apparatus or a data processing system.

The method according to the first aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to several examples of the present disclosure, the method may further comprise performing the monitoring, the joint analysing, the detecting and the responding by a virtual DCS security operator. According to several examples of the present disclosure, the virtual DCS security operator may be a software agent running in a container orchestration cluster; and/or the virtual DCS security operator may be an autonomously running security operator.

Hence, a user may be relieved due to the constantly running software agent, and more security incidents may be detected, security incidents may be detected more reliably, and security incidents may be eliminated faster. Thus, overall security is increased.

According to several examples of the present disclosure, the first monitoring data may represent the monitored IT-related data comprising monitored system diagnostics data, and wherein the second monitoring data may represent the monitored OT-related data comprising monitored process data. Additionally or alternatively, the correlating may comprise correlating at least part of the first monitoring data with at least part of the second monitoring data and/or correlating at least part of the second monitoring data with at least part of the first monitoring data.

Hence, security incident detection may be more comprehensive and may provide more insight due to the knowledge gain obtained from the correlating of monitored IT-data and OT-data.

According to several examples of the present disclosure, the monitoring of the IT-related data and of the OT-related data may comprise monitoring the IT-related data and the OT-related under consideration of predetermined security incident monitoring rules. Additionally or alternatively, the monitoring of the IT-related data and of the OT-related data may comprise monitoring data coming from a Kubernetes Application Programming Interface, API, server and from an Open Platform Communications Unified Architecture, OPC UA, server. Additionally or alternatively, the method may further comprise accessing the Kubernetes API server, and performing the responding based on adjusting parameters available in the Kubernetes API server.

Hence, a large and varied amount of data can be used and acquired as a basis for the monitoring. Thus, quality and reliability of security incident monitoring and detection is further increased. This comprises increasing the amount of true positives, i.e. actual security incidents being correctly detected, and decreasing the amount of false positives , i.e. events that the detection system mistakenly flags as security incidents, and false negatives, i.e. attacks that the detection system misses to detect. Hence, also the responding on detected security incidents is further increased since more options for handling detected security incidents may be considered.

Furthermore, according to several examples of the present disclosure, based on accessing the Kubernetes API server, the responding may comprise re-configuring any Kubernetes resource, adding and/or removing nodes from a cluster associated with the DCS, starting and/or stopping of pods in such nodes, and/or changing network routes among components in the cluster.

Moreover, according to several examples of the present disclosure, the method may further comprise interacting with the production process and interacting with the IT, wherein at least one of the monitoring, the detecting and the responding may be based on the interacting.

It shall be noted that the interacting with the production process may comprise calling OPC UA methods or writing setpoints into an OPC UA server. The interacting with the IT may comprise disjoining a node from the cluster via Kubernetes or force killing a compromised supervision component.

Hence, security incident monitoring and detection as well as the responding are further specified. Thus, quality of security incident eliminating is increased.

According to several examples of the present disclosure, the joint analysing may comprise detecting a security incident in one of the first data and the second data; and analysing the other one of the first data and the second data for an event associated with the detected security incident.

Hence, efficiently in data analysing is increased, since a cross-analysing among the first and second data is performed if an indication for a security incident is given in one of the first data and the second data. Thus, a continuous cross-analysing may be avoided.

According to several examples of the present disclosure, the production process and the containerized DCS may correspond to a certain domain, and wherein the predetermined security incident detection rules and the predetermined security incident response rules may be specific for the certain domain.

Thus, the predetermined security incident detection rules may be understood to be specified or specific predetermined security incident detection rules. The predetermined security incident response rules may be understood to be specified or specific predetermined security incident response rules. For example, DCS-specific security detection and resolution rules encoded in custom operation extensions, like Kubernetes custom resource definitions for example, may be applied.

Hence, application of more suitable, more individual and more applicable rules is enabled. Thus, quality and reliability of security incident monitoring and detection as well as the responding is further increased.

According to several examples of the present disclosure, the method may further comprise using virtual DCS security custom resources that comprise at least part of the predetermined security incident detection rules, of the predetermined security incident response rules, and of the predetermined security incident monitoring rules.

For example, the virtual DCS security custom resources may be specialized ConfigMaps, like key-value pairs for example, that hold DCS security incident monitoring rules, security incident detection rules, and security incident response rules. According to several examples of the present disclosure, a rule may state that more than five separate logins to an OPC UA server in the system per day are unusual and could indicate a security incident. A security incident response rule may state to disconnect all clients from an OPC UA server and temporarily disallow further user access. Other security incident response rules could be to change passwords or to reconfigure a component.

Hence, based on the virtual DCS security custom resources, there may be provided a dynamic configuration through customized operation, like Kubernetes custom resources for example, which allows to improve incident detection and resolution over a system life-cycle.

According to several examples of the present disclosure, the method may further comprise modifying the virtual DCS security custom resources for at least one of the predetermined security incident detection rules, the predetermined security incident response rules, and the predetermined security incident monitoring rules. The modifying may be performed manually by a user, automatically by a reasoning system associated with the DCS and without involving the user, or semi-automatically where the user provides guidance to the reasoning system.

It shall be noted that automation for the automatic or semi-automatic modifying may be achieved based on applying machine learning / reasoning systems on existing data to derive new rules. The existing data may comprise the first data and the second data as indicated above. The existing data may further comprise historic first data and historic second data. The existing data may further comprise externally obtained data, like data from a security information and event management, SIEM, system for example. The existing data may further comprise the predetermined security incident detection, response, and monitoring rules. New rules may comprise new security incident detection, response, and monitoring rules.

Hence, security incident monitoring and detection as well as the responding are further individualised, and a user is further relieved since the modifying may be performed automatically or semi-automatically. Thus, quality of security incident eliminating is increased.

According to several examples of the present disclosure, the responding may comprise at least one of:
- notifying a user about the detected security incident;
- applying a command received by a user regarding the detected security incident;
- autonomously applying of a predetermined security incident response rule from the predetermined security incident response rules regarding the detected security incident; and
- simulating a response on the detected security incident before performing the response, and performing the responding further based on a result of the simulating.

For example, the responding may comprise to re-deploy a potentially breached Kubernetes pod to a security quarantine zone in the cluster. In a more severe case, the responding may comprise to partially shut down all non-safety critical pods in the system, like supervisory DCS pods for example, to contain a security incident. According to several examples of the present disclosure, the predetermined security incident response rules may identify the non-safety critical pods.

For example, certain incident response may be simulated before executing them. The simulation could include copies of the DCS pods or even dummy pods and could help to assess the consequences of a partial shutdown of the system.

Hence, a quality of the responding is further increased.

According to several examples of the present disclosure, the method may further comprise exchanging third data with a security information and event management, SIEM, system; and performing at least one of the monitoring, the joint analysing, the detecting, and the responding further based on the third data. The third data is indicative of at least one of:
- recorded events occurred at the production process and/or the containerized DCS,
- performed responses,
- additional, removed and/or updated security incident monitoring rules,
- additional, removed and/or updated security incident detection rules, and
- additional, removed and/or updated security incident response rules.

Hence, further insights are gained and the handling of security incidents is further improved, potentially further specified and individualised, due to the modified security incident monitoring, detection and response rules.

According to a second aspect, there is provided a data processing apparatus for security incident detection in a cloud-native DCS in industrial process automation. The data processing apparatus comprising a processor being configured to carry out the method of the first aspect.

The data processing apparatus according to the second aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to several examples of the present disclosure, the data processing apparatus may comprise a Kubernetes client, an OPC UA client, an incident detector, an incident responder and an user interface. The Kubernetes client may be communicatively connected with the incident detector and the incident responder, the OPC UA client may be communicatively connected with the incident detector and the incident responder, the incident detector may be communicatively connected with the user interface and the incident responder, and the incident responder may be communicatively connected with the user interface and the incident detector. The Kubernetes client and the OPC UA client may be configured to perform the monitoring according to the method of the first aspect, the incident detector may be configured to perform the joint analysing and the detecting according to the method of the first aspect, and the incident responder may be configured to perform the responding according to the method of the first aspect.

According to a third aspect, there is provided a security system or data processing system for security incident detection in a cloud-native DCS in industrial process automation. The data processing system comprising a data processing apparatus of the second aspect being configured to carry out the method of the first aspect. Additionally or alternatively, the data processing system comprises means to carry out the method of the first aspect.

The data processing system according to the third aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to a fourth aspect, there is provided an industrial plant comprising a data processing apparatus of the second aspect being configured to carry out the method of the first aspect and/or a data processing system of the third aspect.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry or in chemical industry.

The industrial plant according to the fourth aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

According to a seventh aspect, there is provided a use of a data processing apparatus of the second aspect, and/or of a data processing system of the third aspect, and/or of an industrial plant of the fourth aspect.

The use according to the seventh aspect is advantageous in that it may participate in enabling for achieving a higher security through better security detection. There is further enabled a potentially fast reaction to security breaches through automatic reactions. Further, user interaction and refinement is improved since there is provided an autonomously running system with ability for user interaction and refinement. Moreover, a seamless integration with a cloud-native DCS is realized.

The method of the first aspect may be computer implemented.

Optional features of the first aspect may form part of any of the second to seventh aspects, mutatis mutandis.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 shows a context of a Virtual DCS Security Operator according to several examples of the present disclosure;
- Figure 2 illustrates a flowchart indicative of a method according to several examples of the present disclosure;
- Figure 3 shows a system comprising the Virtual DCS Security Operator and a SIEM according to several examples of the present disclosure; and
- Figure 4 shows an architecture of the Virtual DCS Security Operator according to several examples of the present disclosure.

### DETAILED DESCRIPTION

According to several examples of the present disclosure, there is provided a Virtual DCS Security Operator for cloud-native distributed control systems (DCS) used in process automation. The Virtual DCS Security Operator is a continuously running software agent, running in a container orchestration cluster and may continuously monitor both IT-data and OT-data for potential security incidents. Thus, the Virtual DCS Security Operator may monitor data coming from a production process and a DCS, may detect potential security incidents according to domain-specific rules, and can, in specific cases, react autonomously to them. Hence, the Virtual DCS Security Operator can be configured with domain-specific detection rules. In more detail, upon detecting a security breach, the Virtual DCS Security Operator can either query the user for an incident response, or execute pre-specified, domain-specific incident responses autonomously. For the reacting autonomously, the operator may use pre-specified, domain-specific rules and can issue commands to the IT infrastructure, like shutting down servers for example, or the OT infrastructure, like re-configuring a heat exchanger for example. Hence, the Virtual DCS Security Operator is enabled to quickly react upon security breaches and may potentially keep them from spreading. The Virtual DCS Security Operator's configuration can be extended during runtime without interrupting a service, so the incident detections and responses may continuously get more powerful.

According to several examples of the present disclosure, the Virtual DCS Security Operator is a virtualized operator for security incident monitoring, detection, and automatic reaction. The Virtual DCS Security Operator may correlate both IT-data and OT-data during incident monitoring to be able to detect more subtle security breaches. The Virtual DCS Security Operator may comprise a dynamic configuration through customized operation, like Kubernetes custom resources for example, to be able to improve incident detection and resolution over a system life-cycle. The Virtual DCS Security Operator may perform autonomous incident response utilizing both automation equipment, like via Open Platform Communications Unified Architecture (OPC UA) for example, and IT equipment, like via Kubernetes for example.

According to several examples of the present disclosure, in more detail, being deployed in a container orchestration framework, the Virtual DCS Security Operator can react quickly to potential security incidents. This can help to quickly contain security breaches in the system and isolate them. The Virtual DCS Security Operator can correlate process data and system diagnostics data and thus can potentially identify more kinds of security breaches than other security incident reporting systems that only rely on system diagnostics data. For example, it could correlate by timestamp an OT event, such a sensor value drift, with an IT event, such as a user login, so that potential manipulations of the automation procedures can be detected. It can also apply DCS-specific security detection and resolution rules encoded in custom operation extensions, like Kubernetes custom resource definitions for example. Unlike a classical reporting system, the Virtual DCS Security Operator can interact with the process, like calling OPC UA methods or writing setpoints into an OPC UA server for example, and can interact with the IT, like disjoining a node from the cluster via Kubernetes, or force killing a compromised supervision component for example.

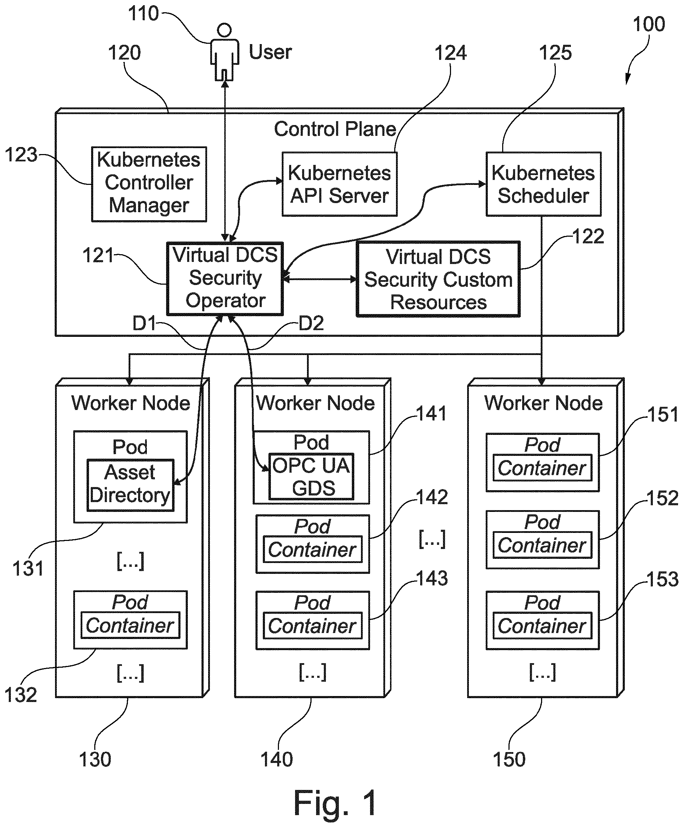

Referring now to Figure 1, Figure 1 shows a typical context or context system 100 the Virtual DCS Security Operator 121 may be running in. The Virtual DCS Security Operator 121 is started at cluster startup and runs in the cluster's control plane 120, like dedicated Kubernetes management nodes comprising a Kubernetes Controller Manager 123, a Kubernetes API Server 124 and a Kubernetes Scheduler 125. The control plane 120 can be hosted on multiple nodes 130, 140, 150 to provide redundancy for higher robustness, in this case the Virtual DCS Security Operator 121 would also feature multiple instances running in parallel, with one instance being the leader, and other instances being the followers, ready to take over in case the leader fails.

The Virtual DCS Security Operator 121 uses Virtual DCS Security Custom Resources 122, which in this case may be specialized ConfigMaps, like key-value pairs for example, that hold DCS security incident monitoring rules, security incident detection rules, and security incident response rules. For example, a rule may state that more than five separate logins to an OPC UA server in the system per day are unusual and could indicate a security incident. A response rule may state to disconnect all clients from an OPC UA server and temporarily disallow further user access. Other response rules could be to change passwords or to reconfigure a component. More extreme response rules may involve shutting down running pods (pods illustrated as an example in Figure 1 are 131, 132, 141, 142, 143, 151, 152, 153) or draining entire nodes 130, 140, 150 in case of operating system level security breaches. The system comes with pre-defined generic DCS rules that may apply to most cloud-native DCS systems. A user 110 can add own custom-rules in a declarative manner through Kubernetes standard tools, like CLI or dashboard for example, or via specialized configuration tools written against the Kubernetes APIs.

To monitor the system and apply responses, the Virtual DCS Security Operator 121 can access the Kubernetes API server 124. For example, Virtual DCS Security Operator 121 can start or stop pods 131, 132, 141, 142, 143, 151, 152, 153, reconfigure any Kubernetes resource, add or remove nodes 130, 140 ,150 from the cluster or change the network routes among components. The Kubernetes API provides a rich interface for all kinds of system management functionality regarding cloud native software. Changes to the API are picked up by the Kubernetes Scheduler 125, which for example schedule the creation or deletion of a pod 131, 132, 141, 142, 143, 151, 152, 153 on one of the worker nodes 130, 140, 150.

Dozens of worker nodes 130, 140, 150 may execute the DCS application services in software containers, orchestrated as pods 132, 142, 143, 151, 152, 153 . In a DCS, these application services include alarm management, process graphics, process historian, control execution, etc. For all the industrial assets managed by the system, DCSs typically include an Asset Directory (see pod 131 in Figure 1) that provides different views on the assets following an object-oriented paradigm. Live data from the process, like sensor values or machine states for example, can be extracted via the references provided by the Asset Directory. The Virtual DCS Security Operator 121 is configured to monitor selected variables of selected assets that may be potentially relevant for the incident detection. Live data can be transmitted via typical communication protocols, like OPC UA for example. To discover OPC UA servers, the Virtual DCS Security Operator 121 can also connect to an OPC UA Global Discovery Server (GDS) (see pod 141 in Figure 1), according to IEC 62541-12. OPC UA GDS provides a directory of all OPC UA servers registered in the system.

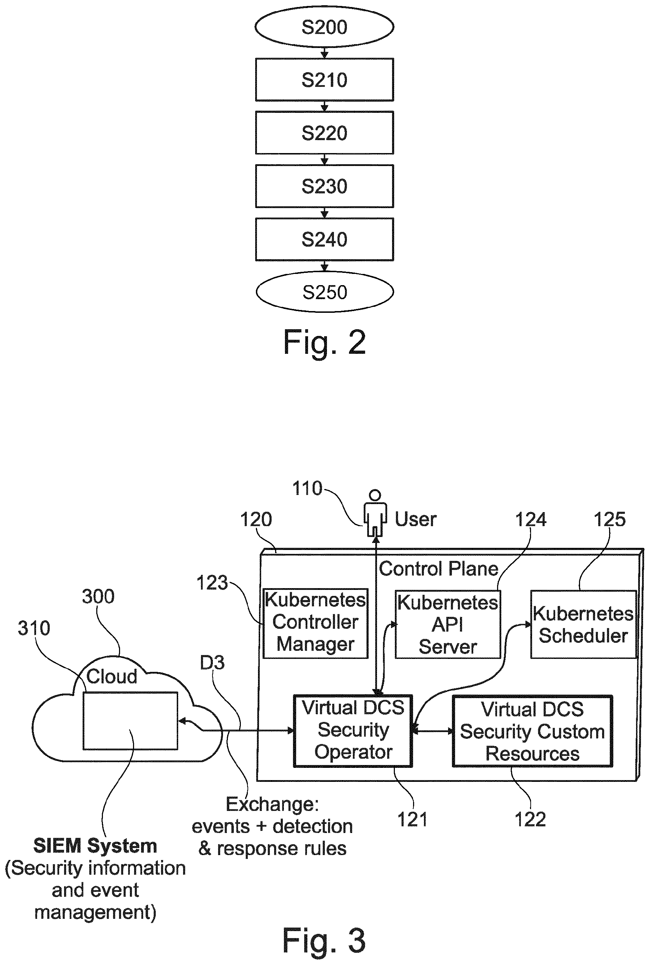

Referring now to Figure 2, Figure 2 illustrates a flowchart indicative of a method according to several examples of the present disclosure. The method is a method for security incident detection in a cloud-native DCS in industrial process automation.

The method according to Figure 2 may be applied by such Virtual DCS Security Operator 121 as outlined above with reference to Figure 1.

The method starts in S200.

In S210, the method comprises monitoring information technology, IT -related data and operation technology, OT, -related data at a production process and at a containerized DCS associated with the production process

In S220, the method comprises joint analysing of first data D1 indicative of first monitoring data from the monitoring of the IT-related data and of second data D2 indicative of second monitoring data from the monitoring of the OT-related data, the joint analysing based on correlating at least part of the first data D1 with at least part of the second data D2 and/or based on correlating at least part of the second data D2 with at least part of the first data D1.

In S230, the method comprises, based on the joint analysing, detecting a security incident under consideration of predetermined security incident detection rules.

In S240, the method comprises, based on a result of the detecting, responding on a detected security incident for handling of the detected security incident under consideration of predetermined security incident response rules.

The method ends in S250.

Referring now to Figure 3, Figure 3 schematically illustrates The Virtual DCS Security Operator 121 to interface with a regular Security Event and Incident Management (SIEM) system 310, which may be provided at a cloud server 300. The exchange between both systems works in both directions, i.e. data D3 may be exchanged in both directions between the Virtual DCS Security Operator 121 and the SIEM 310. The Virtual DCS Security Operator 121 may send recorded events and performed responses to the SIEM system 310 to be displayed in the corresponding user interfaces of the SIEM system 310 used by cyber security specialists for example. The SIEM system 310 may provide the Virtual DCS Security Operator 121 with new incident detection and response rules based on learnings from other systems for example. This information can then be used by the Virtual DCS Security Operator 121 for a fast, more informed incident detection and response.

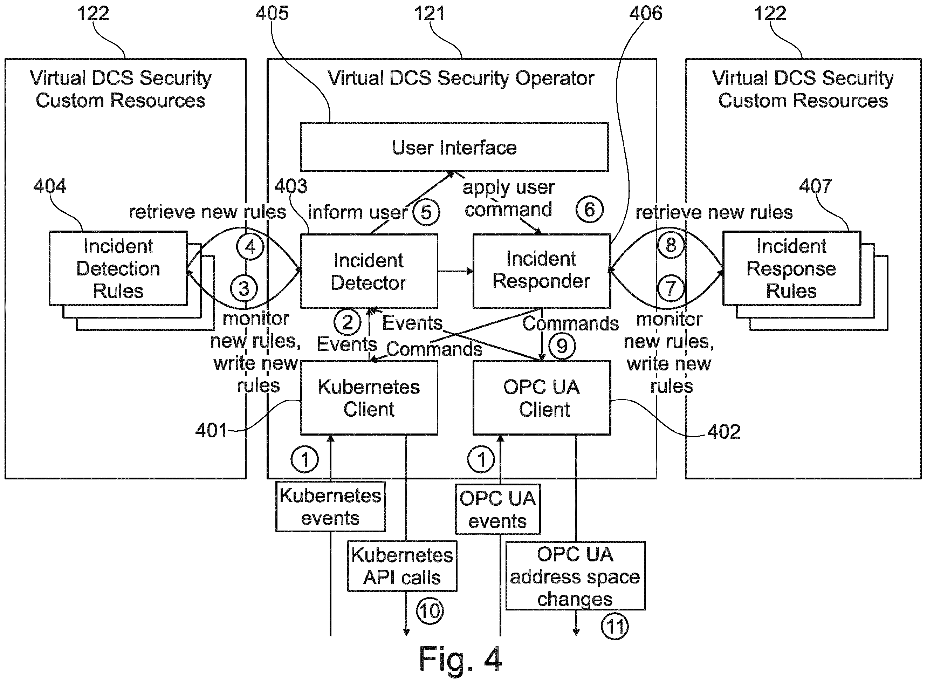

Referring now to Figure 4, Figure 4 depicts the high-level inner structure of the Virtual DCS Security Operator 121. The Virtual DCS Security Operator 121 continuously executes in three different phases, i.e., a monitoring phase, a detection phase, and a response phase, wherein according to several examples of the present disclosure, the detection or detection phase may be understood to also comprise an analysation or analysation phase in which data obtained from the monitoring or monitoring phase are analysed. The monitoring may be independent of detection and response and may run concurrently continuously, even if the Virtual DCS Security Operator 121 is processing an incident response. The Virtual DCS Security Operator 121 is multi-threaded and may process multiple potential security issues in parallel. Kubernetes Operators are often implemented in the programming language Go, which is also used by Kubernetes, but could be implemented in any programming language. In its three phases, the Virtual DCS Security Operator 121 may act as follows according to several examples of the present disclosure:
Incident Monitoring: the Virtual DCS Security Operator 121 permanently monitors data D1 coming from the Kubernetes API (Figure 4, Step 1) and data D2 coming from the registered OPC UA servers (Figure 4, Step 1). For example, the Virtual DCS Security Operator 121 may permanently monitor Kubernetes events and OPC UA events via a Kubernetes Client 401 and a OPC UA client 402 included in the Virtual DCS Security Operator 121. The data D1, D2 may include certain equipment states, process alarm lists, typical audit trail data, pod life cycles, configuration changes etc. For larger installations this may be supported by distributed event streaming platforms, such as Apache Kafka.

Incident Detection: The Incident Detector 403 is provided with the Kubernetes events and OPC UA events, may filter the data, and applies Incident Detection Rules 404 on the data or filtered data. New rules may be integrated immediately after a user 110 has specified such new rules in a Virtual DCS Security Custom Resource 122 (Figure 4, Steps 3 and 4). The Incident Detector 403 can also be extended to identify patterns in the data and potentially suggest new rules by itself. Because the Incident Detector 403 has access to process data D2 and IT data D1, the Incident Detector 403 can correlate different event streams, like Kubernetes events and OPC UA events, and may thus potentially reveal additional security breaches that would otherwise go unnoticed. For example, unusual sensor readings, like a motor starting and stopping irregularly for example, found through OPC UA, could be correlated with newly started pods in the system or unusual configuration changes in Kubernetes. This would not easily be possible if the process data D2 and the IT data D1 would be analyzed separately. Upon an actual incident detection, the Virtual DCS Security Operator 121 can inform the user 110 via the User Interface 405 (Figure 4, Step 5) and/or directly act by passing the incident information to the Incident Responder 406.

Incident Response: The Incident Responder 406 similarly operates as the Incident Detector 403 upon custom Incident Response Rules 407 specified as Virtual DCS Security Custom Resources 122. Beside applying commands coming from the User Interface 405 (Figure 4, Step 6), the Incident Responder 406 can in some occasions act autonomously and directly apply a pre-specified incident response rule 407 without user interaction (Figure 4, Steps 7 and 8). This allows for fast reactions to security breaches. The Incident Responder 406 passes commands or incident response commands to the IT infrastructure (Figure 4, Step 9). The Incident Responder 406 can utilize the entire Kubernetes API (Figure 4, Step 10) and connected OPC UA servers (Figure 4, Step 11) to issue incident response commands. For example, the Incident Responder 406 could re-deploy a potentially breached Kubernetes pods to a security quarantine zone in the cluster. In a more severe case, the Incident Responder 406 could partially shut down all non-safety critical pods in the system, like supervisory DCS pods for example, to contain a security incident. This is only possible since the Incident Responder 406 has incident response rules 407 that clearly identify the non-safety critical pods and could not be done by a generic incident response system.

In a more advanced variant, the Incident Responder 406 could even try to "simulate" certain incident response before executing them. The simulation could include copies of the DCS pods or even dummy pods and could help to assess the consequences of a partial shutdown of the system.

The Incident Responder 406 can also interactively with the user try to formulate appropriate incident responses using a conversational user interface and feeding the current incident detection information, as well as the cluster status iteratively into a large language model (LLM). Prompts to the LLM could ask for suggestions on how to deal with the situation and even predicting the consequences of specific incident responses.

Successful incident responses comprising actions and commands can be archived and turned into new incident response rules to again be quickly executed in the future if a similar situation arises.

According to several examples of the present disclosure, there is provided a data processing apparatus for security incident detection in a cloud-native DCS in industrial process automation. The data processing apparatus may be configured to carry out the method of Figure 2 and/or the method outlined with reference to Figure 4 (Steps 1 to 11). The data processing apparatus may represent and/or may function as such Virtual DCS Security Operator 121 as outlined above with reference to Figures 1, 3 and 4.

In more detail, according to various examples, the data processing apparatus configured to carry out the method of Figure 2 and/or to carry out the method of Figure 4 may comprise a processing circuitry, a processing function, a processing means, a processing unit or a processor, which enables the data processing apparatus to participate for security incident detection in a cloud-native DCS in industrial process automation. The processor may comprise one or more processing portions or functions, wherein the processing portions or functions may be provided as one or more physical or virtual entities. The data processing apparatus may comprise one or more communication interfaces. The data processing apparatus may further comprise a memory or memory unit for storing data, programs and/or instructions to be executed by the processing unit. The memory may be a memory internal to the data processing apparatus or may be a memory external to the data processing apparatus, for example at a cloud server. The processor may comprise one or more portions, which enable the data processing apparatus to execute the method of Figure 2, for example. According to several examples of the present disclosure, a monitoring portion may be configured to perform such monitoring according to S210 of Figure 2, a joint analysing portion may be configured to perform such joint analysing according to S220 of Figure 2, a detecting portion may be configured to perform such detecting according to S230 of Figure 2, and a responding portion may be configured to perform such responding according to S240 of Figure 2.

The portions of the data processing apparatus may also be understood to represent means for carrying out the certain functions, for example.

According to several examples of the present disclosure, there is provided a data processing system for security incident detection in a cloud-native DCS in industrial process automation. The data processing system may comprise a data processing apparatus as outlined above being configured to carry out the method of Figure 2 and/or to carry out the method of Figure 4. Additionally or alternatively, the data processing system may be configured to carry out the method of Figure 2 and/or to carry out the method of Figure 4. The data processing system may be such context system 100 as outlined above with reference to Figure 1.

According to several examples of the present disclosure, there is provided an industrial plant comprising the data processing apparatus as outlined above and/or the data processing system as outlined above.

According to several examples of the present disclosure, there is provided a computer-readable medium comprising instructions which, when executed by a computing system, cause the computing system to perform the method of Figure 2 and/or to perform the method of Figure 4. The computer-readable medium may be transitory or non-transitory, volatile or non-volatile.

According to several examples of the present disclosure, there is provided a computer program product comprising instructions which, when executed by a computing system, enable or cause the computing system to perform the method of Figure 2 and/or to perform the method of Figure 4. The computer program product may comprise a computer-readable medium comprising instructions of the computer program product.

According to several examples of the present disclosure, there is provided a use of the data processing apparatus as outlined above, and/or of the data processing system as outlined above, and/or of the industrial plant as outlined above.

The method according to Figure 2 and/or Figure 4 may be computer implemented.

Optional features of the methods according to Figure 2 and Figure 4 may form part of any of the data processing apparatus, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for security incident detection in a cloud-native distributed control system, DCS, in industrial process automation, the method comprising:
monitoring (S210) information technology, IT -related data and operation technology, OT, -related data at a production process and at a containerized DCS associated with the production process;
joint analysing (S220) of first data (D1) indicative of first monitoring data from the monitoring of the IT-related data and of second data (D2) indicative of second monitoring data from the monitoring of the OT-related data, the joint analysing based on correlating at least part of the first data (D1) with at least part of the second data (D2) and/or based on correlating at least part of the second data (D2) with at least part of the first data (D1);
based on the joint analysing, detecting (S230) a security incident under consideration of predetermined security incident detection rules (404); and
based on a result of the detecting, responding (S240) on a detected security incident for handling of the detected security incident under consideration of predetermined security incident response rules (407).

2. The method according to claim 1, further comprising performing the monitoring, the joint analysing, the detecting and the responding by a virtual DCS security operator (121), wherein the virtual DCS security operator (121) is a software agent running in a container orchestration cluster associated with the DCS; and/or wherein the virtual DCS security operator (121) is an autonomously running security operator.

3. The method according to claim 1 or 2,
wherein the first monitoring data represents the monitored IT-related data comprising monitored system diagnostics data, and wherein the second monitoring data represents the monitored OT-related data comprising monitored process data; and/or
wherein the correlating comprises correlating at least part of the first monitoring data with at least part of the second monitoring data and/or correlating at least part of the second monitoring data with at least part of the first monitoring data.

4. The method according to any of claims 1 to 3,
wherein the monitoring of the IT-related data and of the OT-related data comprises monitoring the IT-related data and the OT-related under consideration of predetermined security incident monitoring rules; and/or
wherein the monitoring of the IT-related data and of the OT-related data comprises monitoring data coming from a Kubernetes Application Programming Interface, API, server and from an Open Platform Communications Unified Architecture, OPC UA, server; and/or
wherein the method further comprises accessing the Kubernetes API server; and performing the responding based on adjusting parameters available in the Kubernetes API server.

5. The method according to any of claims 1 to 4, wherein the joint analysing comprises detecting a security incident in one of the first data (D1) and the second data (D2); and analysing the other one of the first data (D1) and the second data (D2) for an event associated with the detected security incident.

6. The method according to any of claims 1 to 5,
wherein the production process and the containerized DCS correspond to a certain domain, and
wherein the predetermined security incident detection rules (404) and the predetermined security incident response rules (407) are specific for the certain domain.

7. The method according to any of claims 1 to 6, wherein the method further comprises using virtual DCS security custom resources (122) that comprise at least part of the predetermined security incident detection rules (404), of the predetermined security incident response rules (407), and of the predetermined security incident monitoring rules.

8. The method according to claim 7, further comprising modifying the virtual DCS security custom resources (122) for at least one of the predetermined security incident detection rules (404), the predetermined security incident response rules (407), and the predetermined security incident monitoring rules,
wherein the modifying is performed manually by a user (110), automatically by a reasoning system associated with the DCS and without involving the user (110), or semi-automatically where the user (110) provides guidance to the reasoning system.

9. The method according to any of claims 1 to 8, wherein the responding comprises at least one of:
notifying a user (110) about the detected security incident;
applying a command received by a user (110) regarding the detected security incident;
autonomously applying of a predetermined security incident response rule from the predetermined security incident response rules (407) regarding the detected security incident; and
simulating a response on the detected security incident before performing the response, and performing the responding further based on a result of the simulating.

10. The method according to any of claims 1 to 9, wherein the method further comprises
exchanging third data (D3) with a security information and event management, SIEM, system (310); and
performing at least one of the monitoring, the joint analysing, the detecting, and the responding further based on the third data (D3),
wherein the third data (D3) is indicative of at least one of:
recorded events occurred at the production process and/or the containerized DCS,
performed responses,
additional, removed and/or updated security incident monitoring rules, additional, removed and/or updated security incident detection rules, and
additional, removed and/or updated security incident response rules.

11. A data processing apparatus (121) for security incident detection in a cloud-native distributed control system, DCS, in industrial process automation, the data processing apparatus comprising a processor configured to carry out the method of any of claims 1 to 10.

12. The data processing apparatus (121) according to claim 11, comprising
a Kubernetes client (401), an OPC UA client (402), an incident detector (403), an incident responder (406) and an user interface (405),
wherein the Kubernetes client (401) is communicatively connected with the incident detector (403) and the incident responder (406),
the OPC UA client (402) is communicatively connected with the incident detector (403) and the incident responder (406),
the incident detector (403) is communicatively connected with the user interface (405) and the incident responder (406), and
the incident responder (406) is communicatively connected with the user interface (405) and the incident detector (403),
wherein the Kubernetes client (401) and the OPC UA client (402) are configured to perform the monitoring according to claim 1,
the incident detector (403) is configured to perform the joint analysing and the detecting according to claim 1, and
the incident responder (406) is configured to perform the responding according to claim 1.

13. A data processing system (100) for security incident detection in a cloud-native distributed control system, DCS, in industrial process automation, the data processing system (100) comprising a data processing apparatus (121) of claim 11 and/or the data processing system (100) comprising means to perform the method of any of claims 1 to 10.

14. A computer-readable medium comprising instructions which, when executed by a computing system, cause the computing system to perform the method of any of claims 1 to 10.

15. A computer program product comprising the virtual DCS security operator (121) according to any of claims 1 to 10, the computer program product comprising instructions which, when executed by a computing system, enable and/or cause the computing system to perform the method of any of claims 1 to 10.
